# EUROPÄISCHE PATENTSCHRIFT

(11) **EP 2 071 537 B1**
(45) Veröffentlichungstag und Bekanntmachung des Hinweises auf die Patenterteilung: **25.07.2012**
(21) Anmeldenummer: 08105410.8
(22) Anmeldetag: 23.09.2008
(51) Int. Cl.: G08B 25/01, G08G 1/123, B60R 25/10, H04Q 9/00

(54) **Verfahren und Vorrichtung zur Erkennung und Meldung eines Aussteigens von Personen aus einem Fahrzeug**
Method and device for identifying and reporting a person exiting a vehicle
Procédé et dispositif de reconnaissance et de signalisation d'une sortie de personnes d'un véhicule

(30) Priorität: 05.11.2007 DE 102007052667
(43) Veröffentlichungstag der Anmeldung: 17.06.2009
(73) Patentinhaber: Robert Bosch GmbH, 70442 Stuttgart (DE)
(72) Erfinder: Moennich, Joerg, 01159, Dresden (DE); Schaaf, Gunther, 70806, Kornwestheim (DE); Haug, Matthias, 70469, Stuttgart (DE)

(56) Entgegenhaltungen:
- DE-A1- 19 917 207
- DE-A1-102004 044 204
- JP-A- 4 183 202
- US-A1- 2005 073 137
- US-B1- 6 711 399

## Beschreibung

Die Erfindung betrifft ein Verfahren zur Erkennung und Meldung eines Aussteigens von mindestens einer Person aus einem Fahrzeug und eine entsprechende Vorrichtung.

### Stand der Technik

Unfallmeldesysteme als solche sind bekannt. Beispielswiese beschreibt die US 5,311,197 A ein System zur Fahrzeugortung in Notfallsituationen. Ausgelöst durch das Vorliegen eines Notfallzustandes wird hierbei ein Sender aktiviert, der einer oder mehreren Stationen eines Entfernungsmessungssystems die Ortung des Fahrzeugs ermöglicht. Hierzu wird über einen Fahrzeugzustandssensor mindestens eine Situation erfasst und ausgewertet, die auf das Vorliegen eines Notfalls schließen lässt. Diese Systeme gestatten die leichte Auffindbarkeit eines verunglückten oder liegen gebliebenen Fahrzeugs, beispielsweise über Satellitennavigation oder andere Entfernungsmesssysteme. Allerdings wird hierbei lediglich auf das Fahrzeug als solches abgestellt. Eine Gefährdung von Personen wird hierbei nicht reduziert und nicht vermieden.

Weiter zeigt die US 2005/0073137 A1 eine elektrische Airbagkontrolleinheit.
Dabei ist es vorgesehen, bei Problemen in einem Reisezustand oder einem Parkzustand eines Fahrzeugs, in welchem die Airbagkontrolleinheit vorgesehen ist, einen vorbestimmten Empfänger zu benachrichtigen. Dies soll beispielsweise geschehen, wenn das Öffnen einer Tür des Fahrzeugs festgestellt wird, obwohl kein Signal eines Schlüssels vorliegt. Die gattungsbildende JP 04-183202 beschreibt einen Passagieranzahlzähler. Dieser soll in einem Zug angeordnet sein und es ermöglichen, die Anzahl der Passagiere, welche eine Tür des Zugs passieren, zu bestimmen. Die DE 10 2004 044 204 A1 beschreibt schließlich eine Vorrichtung zur Betätigung von Türen. Dabei ist es vorgesehen, dass mindestens eine Videokamera zur Beobachtung des Türbereichs vorgesehen ist. Die Videokamera soll Bildbearbeitungsmittel aufweisen, die Bewegungsvorgänge im Türbereich detektieren und die bei Nichtauftreten von relevanten Bewegungsvorgängen während eines Mindestzeitraums ein Auslösesignal für die Betätigung der Tür beziehungsweise Türen erzeugen.

### Offenbarung der Erfindung

Aufgabe der Erfindung ist es, ein Verfahren und eine Vorrichtung zur entsprechenden Meldung und zur Unterstützung betroffener und in der Nähe befindlicher Fahrzeugführer bereitzustellen, das auch das Aussteigen von Personen berücksichtigt.

Hierzu wird ein Verfahren zur Erkennung und Meldung eines Aussteigens von mindestens einer Person aus einem Fahrzeug vorgeschlagen, wobei eine Erfassung des Aussteigens mittels mindestens eines Aussteigsensors und einer Auswerteeinrichtung erfolgt und die Auswerteeinrichtung das Aussteigen bei einer Änderung des Belegzustand des Fahrzeugs durch Änderung der von dem Aussteigsensor gelieferten Daten erkennt. Dabei ist eine Meldung des Aussteigens durch drahtungebundene Nachrichtenübertragung vorgesehen, wobei die Meldung zentral ausgewertet und eine Warnmeldung an andere, vorzugsweise in der Nähe des Fahrzeugs befindliche Verkehrsteilnehmer abgegeben wird und die Meldung an eine Zentralstelle erfolgt, die die Meldung zu der Warnmeldung bearbeitet, oder wobei die Meldung dezentral in dem Fahrzeug ausgewertet und die Wammeldung an die anderen, in der Nähe des Fahrzeugs befindlichen Verkehrsteilnehmer abgegeben wird.

Erfindungsgemäß wird demzufolge abgestellt auf das Aussteigen mindestens einer Person aus dem Fahrzeug. Hierzu wird über mindestens einen Aussteigsensor erfasst, dass die Person das Fahrzeug verlässt. Allein nämlich schon der Umstand, dass die Person ausgestiegen ist und sich beispielsweise auf der Fahrbahn befindet, ist für die Sicherheit des in unmittelbarer Umgebung erfolgenden Verkehrs wichtig. Diese Information, dass die Person ausgestiegen ist, wird durch drahtungebundene Nachrichtenübertragung, insbesondere also über gebräuchliche Funkeinrichtungen, gemeldet. Über die Meldung kann eine Weiterverarbeitung der Information in geeigneter Weise erfolgen, beispielsweise als Wammeldung über den Verkehrsfunk. Häufig nämlich verlassen Fahrzeuginsassen das Fahrzeug, was insbesondere nach einem Unfall oder einer Panne, insbesondere auf stark befahrenen Straßen, wie beispielsweise Autobahnen, ratsam sein kann, um bei einem Auffahren nachfolgenden Verkehrs auf das liegengebliebene Fahrzeug nicht gefährdet zu werden. Insbesondere aber bei Unfällen oder bei unerwarteten Pannen reagieren Fahrzeuginsassen unüberlegt oder verwirrt, so dass sie nicht in erster Linie auf ihre eigene Sicherheit bedacht sind. Hierdurch kann es zu einer Gefährdung sowohl dieser Personen als auch für andere Fahrzeuge kommen. Dem kann erfindungsgemäß durch eben die Warnmeldung begegnet werden, die andere Fahrzeuge vom Vorhandensein von Personen auf der Fahrbahn oder von der Möglichkeit des Vorhandenseins von Personen auf der Fahrbahn unterrichtet.

Dabei wird die Meldung zentral ausgewertet und eine Warnmeldung an andere, vorzugsweise in der Nähe des Fahrzeugs befindliche Verkehrsteilnehmer abgegeben, wobei die Meldung an eine Zentralstelle erfolgt, die die Meldung zu der Warnmeldung bearbeitet. Hierbei ist, wie beschrieben, denkbar, dass die Warnmeldung über allgemein verfügbare Mittel, beispielsweise Radiowellen, an andere Verkehrsteilnehmer als Verkehrsmeldung übertragen wird, oder aber über nicht allgemein verfügbare Mittel, also insbesondere solche, die vorhandene Fahrerassistenzsysteme in anderen Fahrzeugen ansprechen. Insbesondere über beispielsweise im Abonnement verfügbare Dienste sind für entsprechend ausgerüstete Fahrzeuge solche Informationen zur Verfügung stellbar, bevorzugt so, dass die vorhandenen Systeme bei Empfang unmittelbar reagieren.

Alternativ wird die Meldung dezentral ausgewertet und eine Wammeldung an die anderen, in der Nähe des Fahrzeugs befindlichen Verkehrsteilnehmer abgegeben. In dieser Verfahrensausbildung erfolgt die Auswertung folglich nicht über eine zentrale Stelle, sondern vielmehr dezentral, insbesondere nämlich in dem Fahrzeug selbst, aus dem die Person ausgestiegen ist. Die Warnmeldung wird von dem System im Fahrzeug generiert und an andere Verkehrsteilnehmer ausgegeben, wobei der Empfangsbereich der Warnmeldung hierbei sinnvoller Weise derart bemessen ist, dass die Wammeldung nur von in der Nähe befindlichen Verkehrsteilnehmern empfangen werden kann. Nur für diese nämlich ist die Information darüber, dass sich an einer Stelle in der Nähe eine Person befindet, die das Fahrzeug verlassen hat, von Bedeutung. Alternativ oder kumulativ hierzu ist es auch möglich, eine Relevanzprüfung bei den Verkehrsteünehmern vorzusehen, die die Warnmeldung empfangen; eine solche Relevanzprüfung wird sinnvollerweise die Wammeldung in Hinblick auf die lokale Zuordnung und die relative Distanz des Ereignisses zum jeweiligen Verkehrsteilnehmer berücksichtigen.

In einer bevorzugten Verfahrensausbildung erfolgt das Erkennen und/oder das Melden des Aussteigens im Falle eines Unfalls des Fahrzeugs oder im Falle des Liegenbleibens des Fahrzeugs oder im Falle eines stehenden, sich an einem Verkehrsgefährdungsort befindlichen Fahrzeugs, wobei der Verkehrsgefährdungsort eine stark befahrene oder unübersichtliche Stelle ist.
Der Umstand allein, dass eine Person das Fahrzeug verlassen hat, ist nicht ohne Weiteres von Bedeutung für andere Fahrzeuge. Dies ist vielmehr insbesondere dann der Fall, wenn die Person das Fahrzeug im Falle eines Unfalles verlassen hat, wenn die Person bei Liegenbleiben des Fahrzeugs ausgestiegen ist, oder wenn sich das Fahrzeug an einem Verkehrsgefährdungsort befindet, also an einem solchen, an dem für das Fahrzeug und von dem Fahrzeug für andere eine Gefahr ausgehen kann; dies ist insbesondere an stark befahrenen Stellen, insbesondere Autobahnen und Schnellstraßen, sowie an unübersichtlichen Stellen der Fall. Die Erkennung, ob eine dieser Situationen vorliegt, erfolgt hierbei durch bekannte Systeme, insbesondere Unfalldetektoren und/oder Fahrzeugdiagnosesysteme sowie hinsichtlich des Ortes, an dem das Fahrzeug steht, über bekannte Positionserfassungssysteme, wie sie beispielsweise als GPS-Systeme bekannt sind. Zusätzlich zur Erkennung, dass die Person das Fahrzeug verlässt, wird folglich eine Erkennung auf das Vorliegen einer der beschriebenen Situationen durchgeführt, gleichzeitig oder vor oder nach der Ausstiegserkennung, oder die Ausstiegserkennung wird nur dann durchgeführt, wenn eine dieser Situationen vorliegt. Liegen das Aussteigen und mindestens eine dieser Situationen kumulativ vor, wird die Meldung vorgenommen.
Hinsichtlich der Ortsermittlung ist ganz bevorzugt eine idealer Weise spurgenaue Karte vorgesehen, die zusätzlich Informationen darüber liefern kann, auf welcher von mehreren Fahrspuren das Fahrzeug steht. Insbesondere ist dies von Bedeutung, wenn das Fahrzeug auf einer Überholspur liegen bleibt, wo es zum Einen vom nachfolgenden Verkehr nicht erwartet wird, zum Anderen Personen, die das Fahrzeug verlassen, einer besonderen Gefährdung ausgesetzt sind.

In einer weiteren, bevorzugten Ausführungsform erfolgt eine Ausrichtungsermittlung des Fahrzeugs, wobei die Ausrichtung des Fahrzeugs relativ zu seiner Umwelt ermittelt wird. Mittels einer geeigneten Sensorik, beispielsweise einer Inertialsensorik, mehrerer GPS-Empfänger, Bildauswertung des Umfeldes beziehungsweise der Umgebung des Fahrzeugs wird hierbei ermittelt, wie die Ausrichtung des Fahrzeugs relativ zu seiner Umwelt ist, also welche Lage das Fahrzeug im Raum einnimmt. Die Ausrichtung des Fahrzeugs ist nämlich, insbesondere nach einem Umfall, nicht notwendig identisch mit der Fahrtrichtung, der es zuvor gefolgt ist. Das Fahrzeug kann sich beispielsweise gedreht oder überschlagen haben, mithin also im Wesentlichen quer zur ursprünglichen Fahrtrichtung oder entgegengesetzt derselben stehen. Über die geeignete Sensorik, wie sie beispielsweise als Inertialsensorik, mehrere GPS-Empfänger an unterschiedlichen Stellen des Fahrzeugs oder eine Bildauswertung des Umfeldes, jeweils mit Inbezugsetzung zu einer möglichst genauen Karte, erfolgt, wird die Lage des Fahrzeugs im Raum beschrieben.

In einer besonders bevorzugten Ausführungsform erfolgt eine Richtungserkennung hinsichtlich der Richtung, in der die Person das Fahrzeug verlässt. Zusätzlich zu dem Umstand, dass das Fahrzeug von der Person verlassen wurde, ist die Richtung interessant, in der diese das Fahrzeug verlassen hat. Insbesondere ist dies von Bedeutung, um auf stark frequentierten Straßen oder auf solchen, die mit hoher Geschwindigkeit befahren werden, insbesondere Autobahnen und Schnellstraßen, eine Aussage darüber treffen zu können, wie hoch das Gefährdungspotential ist, das durch und für die Person besteht. Kann beispielsweise erkannt werden, dass die Person das Fahrzeug in Richtung auf den sicheren Seitenstreifen verlässt und sich in ein Gebiet begibt, in dem kein Fahrzeugverkehr zu enwarten ist (beispielsweise in jenseits von Seitenstreifen und Leitplanken gelegene Gebiete) ist mit einer Gefährdung durch und für diese Person kaum mehr zu rechnen. Wird jedoch erkannt, dass die Person sich auf der Fahrbahn bewegt, insbesondere entlang der Fahrbahn, oder die Fahrbahn in befahrene Bereiche hinein überqueren will, ist mit einer besonders hohen Gefährdung durch und für die Person zu rechnen.

Die Richtungserkennung erfolgt in einer weiteren Verfahrensausbildung mittels Videosensierung, Radar oder Ultraschallsensierung. Hierbei sind demzufolge Sensoren in Form von optischen Sensoren, beispielsweise Kameras, oder von Ultraschallsensoren in der Form von Ultraschallsendern und -empfängern vorgesehen, die Bewegungen der Person erfassen und aus einer fortlaufenden Erfassung ein Bewegungsmuster erkennen, aus dem die Richtung ableitbar ist, in die sich die Person bewegt. Hierzu kommt insbesondere eine fortdauernde oder intervallische Erfassung des Umfelds des Fahrzeuges durch die genannten Sensoren in Betracht.

In einer weiteren Verfahrensausbildung wird die Richtung als Bestandteil oder zusätzlich zu der Meldung übermittelt. Zusätzlich zur Meldung, dass die Person das Fahrzeug verlassen hat, wird demzufolge auch die Richtung übermittelt, in der sie sich bewegt. Die Information über die Bewegung der Person und ihre Richtung, wie vorstehend erfasst, kann aber auch als Bestandteil der Meldung zur Auswertung übermittelt werden. Hierbei ist auch denkbar, dass die Wammeldung als solche beispielsweise zentral ausgewertet wird, die Richtung aber dezentral, nämlich nur für in der Nähe befindliche Fahrzeuge, oder umgekehrt.

In einer besonders bevorzugten Verfahrensausbildung ist vorgesehen, dass die Richtungserkennung für mehrere Personen, insbesondere für mehrere Richtungen, unabhängig erfolgt. Die Richtungserkennung kann demzufolge für mehrere Personen durchgeführt werden, wobei die Personen sich in unterschiedlicher Richtung bewegen können, und diese Bewegung in unterschiedliche Richtungen jeweils erkannt und erfasst wird. Entsprechend werden die verschiedenen Richtungen, in die die verschiedenen Personen sich bewegen, für die Meldung ausgewertet.

Es wird weiter eine Vorrichtung zur Erkennung und Meldung des Aussteigens von mindestens einer Person aus einem Fahrzeug vorgeschlagen. Die Vorrichtung weist einen Aussteigsensor zur Erfassung des Aussteigens aus dem Fahrzeug und eine Auswerteeinrichtung auf, wobei die Auswerteeinrichtung das Aussteigen bei einer Änderung des Belegzustands des Fahrzeugs durch Änderung der von dem Aussteigsensor gelieferten Daten erkennt. Weiterhin ist eine Meldeeinrichtung vorgesehen, die das Aussteigen durch Abfrage des Sensors drahtungebunden meldet. Dabei wird die Meldung zentral ausgewertet und eine Warnmeldung an andere, vorzugsweise in der Nähe des Fahrzeugs befindliche Verkehrsteilnehmer abgegeben und erfolgt an eine Zentralstelle, die die Meldung zu der Wammeldung bearbeitet. Alternativ wird die Meldung dezentral in dem Fahrzeug ausgewertet und die Wammeldung an die anderen, in der Nähe des Fahrzeugs befindlichen Verkehrsteilnehmer abgegeben. Der Aussteigsensor erkennt hierbei, dass die Person das Fahrzeug verlässt. Die Meldeeinrichtung fragt diesen Sensor - insbesondere periodisch und/oder fortlaufend - ab und wertet das Ergebnis der Abfrage aus, um im Falle des Aussteigens die Meldung über das Aussteigen drahtungebunden zu übermitteln.

Der Aussteigsensor kann hierbei als Türkontaktschalter und/oder Video- und/oder Ultraschallsensor ausgebildet sein. Als weitere Ausführungsformen kommen in Betracht beispielsweise die Auswertung einer Sitzbelegungserkennung, Gurtschlosschalter oder Transponder, insbesondere RFID-Einrichtungen. Türkontaktschalter als solche sind bekannt, sie registrieren das Öffnen einer Tür am Fahrzeug, wie dies im Stand der Technik beispielsweise zur Einschaltung der Innenraumbeleuchtung seit langer Zeit üblich ist. Bevorzugt werden derartige Meldungen jedoch nicht isoliert ausgewertet, insbesondere auch, um dem Verlassen des Fahrzeugs anders als durch die Tür, nämlich beispielsweise durch eine Seitenscheibe oder ein Schiebedach, wenn die Tür sich nicht öffnen lassen sollte, ebenfalls zu erkennen. Hierzu können Videosensoren, beispielsweise in der Form von Kameras oder anderen bildgebenden Sensoren oder Ultraschallsensoren zur Anwendung kommen. Diese registrieren Bewegungen in dem Innenraum sowie das Vorhandensein einer Person im Innenraum des Fahrzeugs und eine Änderung des Zustands des Vorhandenseins, also eben das Verlassen des Fahrzeugs.

In einer bevorzugten Ausführungsform weist die Vorrichtung einen Richtungssensor auf, der zur Erfassung der Richtung dient, in der die Person das Fahrzeug verlässt. Der Richtungssensor erfasst hierbei die Umgebung des Fahrzeugs durch geeignete Erfassungsmittel, insbesondere als in einzelne Bereiche unterteilte Gesamtheit und intervallisch beziehungsweise periodisch oder kontinuierlich, um Bewegungen im Umfeld des Fahrzeugs zu erkennen. Derartige Bewegungen werden ausgewertet in Hinblick auf die Richtung, in der sie erfolgen, und darauf, ob sie der Person zuzuordnen sind (Prüfung, ob Bewegung vom Fahrzeug ausgeht oder sich annähert).

Der Richtungssensor kann hierbei als Video- oder Ultraschallsensor ausgebildet sein, wie vorstehend beschrieben, wobei der Richtungssensor den Bereich um das Fahrzeug herum, also dessen äußere Umgebung, überwacht.

In einer besonders bevorzugten Ausführungsform ist der Richtungssensor ein Mehrfachrichtungssensor zur Erfassung mehrerer Richtungen für mehrere Personen. Wenn nämlich mehrere Personen das Fahrzeug verlassen, kann möglicherweise ihre Richtung, die sie jeweils vom Fahrzeug weg einnehmen, mit einem einzelnen Richtungssensor nicht zuverlässig bestimmt werden; es ist schließlich möglich, dass mehrere Personen das Fahrzeug in unterschiedlicher Richtung verlassen. Durch den Mehrfachrichtungssensor ist es hingegen möglich, den Bewegungen mehrerer Personen die jeweilige Richtung zuzuordnen, in dem die Bewegung von Anbeginn des Verlassens des Fahrzeugs an für jede Person separat erfasst und ausgewertet wird. Auf diese Weise kann dem Umstand Rechnung getragen werden, dass verschiedene Gefährdungspotentiale durch und für unterschiedliche Personen vorliegen, die sich in unterschiedlichen Richtungen bewegen.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand eines Ausführungsbeispiels und eines Verfahrensschemas näher erläutert, ohne jedoch hierauf beschränkt zu sein.

Es zeigen
- Figur 1: eine Vorrichtung zur Erkennung und Meldung eines Aussteigens von Personen aus einem Fahrzeug und
- Figur 2: einen schematischen Verfahrensablauf des entsprechenden Verfahrens.

### Ausführungsform(en) der Erfindung

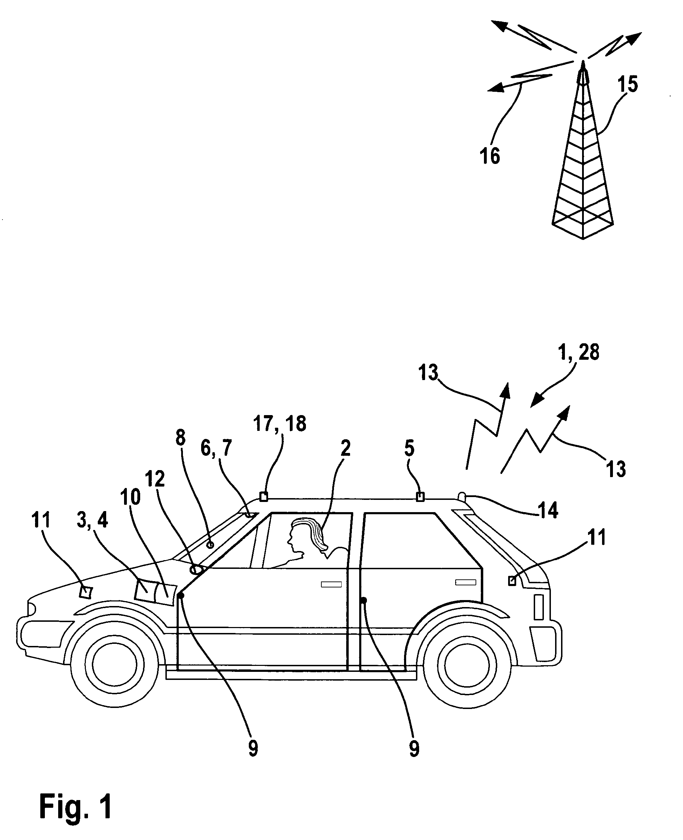

Figur 1 zeigt ein Fahrzeug 1 zur Beförderung mindestens einer Person 2, nämlich ein Kraftfahrzeug 28. Dieses ist mit einem Positionsbestimmungssystem 3, nämlich einem GPS-System 4 ausgerüstet, das beispielsweise für Navigationszwecke des Fahrzeugs 1 eingesetzt wird. Das Positionsbestimmungssystem 3 empfängt zur Positionsbestimmung Satellitendaten über eine Antenne 5, die mittels nicht dargestellter, geeigneter Verbindungen mit dem Positionsbestimmungssystem 3 verbunden ist. Das Fahrzeug 1 weist weiter einen Aussteigsensor 6 auf, der beispielsweise als Videosensor 7 ausgebildet ist. Der Videosensor 7 erfasst fortlaufend oder anlassbezogen einen Fahrzeuginnenraum 8 und erkennt hierbei die Anwesenheit von Personen 2 sowie eine Änderung dieses Zustands der Anwesenheit von Personen 2. Das Fahrzeug 1 verfügt weiter über Türkontaktschalter 9 an allen Fahrzeugtüren, die zum Besteigen oder Verlassen des Fahrzeugs 1 dienen. Die Daten des Aussteigsensors 6, nämlich des Videosensor 7 sowie der Türkontaktschalter 9 werden in einer Auswerteinrichtung 10 laufend auf Zustandsänderungen hin ausgewertet. Wird eine Änderung des Belegungszustandes des Fahrzeugs 1 festgestellt, weil beispielsweise eine Person 2 das Fahrzeug 1 verlässt, wird dies von der Auswerteeinrichtung durch Änderung der vom Aussteigsensor 6 gelieferten Daten erkannt. Gleichzeitig erfolgt ein Abgleich mit Daten des Positionsbestimmungssystems 3, um festzustellen, ob sich das Fahrzeug bewegt oder steht sowie um die aktuelle Position des Fahrzeugs 1 sowie seine Ausrichtung zu ermitteln. Über Fahrzeugzustandssensoren 11, die beispielsweise den regulären Betrieb des Fahrzeugs 1 beziehungsweise das Nichtvorliegen von regulärem Betrieb überwachen, sowie über bei typischen Unfallsituationen betätigte Sensoren, beispielsweise einen Airbagauslöser 12, werden weitere Daten für die Auswerteeinrichtung 10 bereitgestellt, die auf das Vorliegen eines unnormalen Betriebszustandes des Fahrzeugs 1 schließen lassen. Das Positionsbestimmungssystem 3 weist eine fahrbahngenaue Karte auf, die Aussagen darüber zulässt, auf welcher von mehreren gleich laufenden Fahrbahnen (Fahrspuren) sich das Fahrzeug 1 befindet. Wird nun festgestellt, dass die Person 2 das Fahrzeug 1 verlässt, wobei dieses Verlassen an einer unübersichtlichen Stelle erfolgt, die sich aus Daten des Positionsbestimmungssystems 3 und der fahrbahngenauen Karte ergibt, oder im Falle eines Unfalls, wie dies aus Daten der Fahrzeugzustandssensoren 11 respektive des Airbagauslösers 12 ersichtlich ist, erzeugt die Auswerteeinrichtung 10 eine Meldung 13, die über eine Sendeantenne 14 abgestrahlt wird. Hierin werden die aktuellen Positionsdaten des Fahrzeugs 1 übermittelt sowie die Tatsache, dass die Person 2 das Fahrzeug 1 verlassen hat. Die Meldung 13 kann hierbei erfindungsgemäß an eine Zentralstelle 15 erfolgen, die die Meldung 13 zu einer Warnmeldung 16 bearbeitet und an andere, hier nicht dargestellte Verkehrsteilnehmer weitersendet, damit die Warnmeldung 16 bei anderen, in der Nachbarschaft des Fahrzeugs 1 befindlichen Verkehrsteilnehmern dortige Fahrerassistenzsysteme zu einer entsprechenden Signalisierung der jeweiligen Fahrzeuglenker veranlasst beziehungsweise in dortigen Kraftfahrzeugen beispielsweise Bremsassistenten oder Ausweichassistenten aktiviert, sobald die in der Meldung 13 vom Fahrzeug 1 gemeldete Position des Fahrzeugs 1 erreicht wird oder sich der jeweilige Verkehrsteilnehmer dieser Position derart annähert, dass von einer Gefahrenlage auszugehen ist. Die Warnmeldung 16 kann nicht erfindungsgemäß auch als normale Rundfunkmeldung beispielsweise über einen Verkehrsfunk erfolgen. Bevorzugt wird die Warnmeldung 16 aber als Datenmeldung an hierfür ausgerüstete Fahrerassistenzsysteme versandt.

In einer bevorzugten Ausführungsform weist das Fahrzeug 1, verbunden mit der Auswerteeinrichtung 10, einen Richtungssensor 17 auf, der bevorzugt als Mehrfachrichtungssensor 18 ausgebildet ist. Der Richtungssensor 17 erlaubt hierbei die Feststellung, in welcher Richtung die Person 2 das Fahrzeug 1 verlassen hat. Zusammen mit Daten des Positionsbestimmungssystems 3 ist hierbei der Auswerteeinrichtung 10 eine Aussage darüber möglich, in welcher Art und in welchem Grad eine Gefährdung durch und für die Person 2 vorliegt. In der Ausbildung als Mehrfachrichtungssensor 18 ist eine solche Aussage in Bezug auf mehrere Personen 2 möglich, die das Fahrzeug 1 jeweils auch in unterschiedliche Richtungen verlassen können.

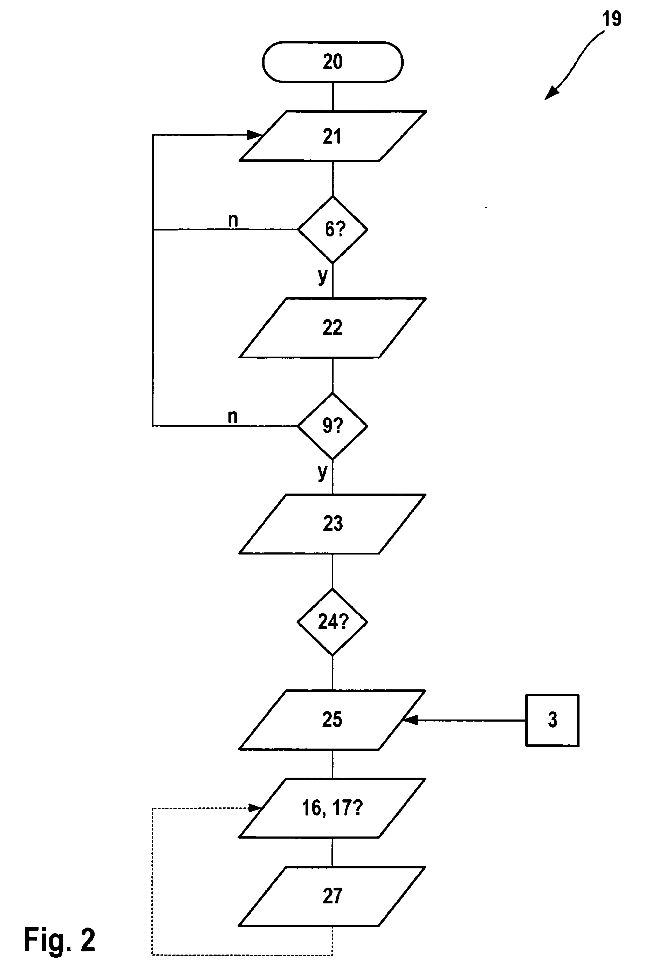

Figur 2 zeigt beispielhaft ein Verfahren 19 zur Erkennung und Meldung eines Aussteigens von mindestens einer Person aus einem Fahrzeug. In Figur 2 nicht ersichtliche Bezugszeichen sind solche aus Figur 1. Das Verfahren 19 beginnt mit einem Start 20 bei Starten des Fahrzeugs. Es erfolgt eine Abfrage 21 des Aussteigsensors 6. Liegt hierbei keine Zustandsänderung hinsichtlich der Belegung des Fahrzeugs 1 mit Personen 2 vor, wird zur Abfrage 21 zurück verzweigt. Liegt eine solche Zustandsänderung vor, werden zur Verifizierung, ob die Zustandsänderung als Aussteigen zu bewerten ist, weitere Abfragen 22 durchgeführt, insbesondere über Türkontaktschalter 9 und/oder ähnliche, hier nicht weiter erläuterte Sensoren, die hinsichtlich der Belegung des Fahrzeugs 1 mit Personen 2 relevant sind, beispielsweise Fensteröffnungssensoren, Schiebedachöffnungssensoren oder Ultraschallsensoren zur Überwachung des Innenraums. Liegt eine solche kumulative Sensorinformation, die auf das Aussteigen einer Person 2 aus dem Fahrzeug 1 schließen lässt, nicht vor, wird zur Abfrage 21 zurück verzweigt. Lässt sich hierbei jedoch auf das Aussteigen einer Person 2 aus dem Fahrzeug 1 schließen, weil beispielsweise ein Ultraschallinnenraumsensor ebenfalls eine Zustandsänderung erkannt hat und/oder beispielsweise ein Türkontaktschalter 9 das Öffnen einer Tür des Fahrzeugs 1 signalisiert hat, wird der Betriebszustand des Fahrzeugs in einer Zustandsabfrage 23 festgestellt. Ergibt sich unter Auswertung der Daten der Zustandsabfrage 23, wie sie beispielsweise von einem Steuergerät des Fahrzeugs, von Fahrzeugzustandsensoren 11, von Airbagauslösern 12, von nicht dargestellten Beschleunigungsaufnehmern oder Querbeschleunigungssensoren oder ähnlichen Werteaufnehmern stammen können, in einer Ereignisauswertung 24, dass ein unnormaler Betriebszustand des Fahrzeugs 1 vorliegt, insbesondere ein Unfall oder ein Fahrzeugdefekt, werden in einem Positionsbestimmungsschritt 25 Positionsdaten aus dem Positionsbestimmungssystem 3 eingelesen sowie die Ausrichtung beziehungsweise Orientierung des Fahrzeugs 1 im Raum ermittelt. Es kann sich hierbei um neu zu erfassende Daten zur Positionsbestimmung über das Positionsbestimmungssystem 3 handeln, oder auch um solche, die das Positionsbestimmungssystem 3 als letzte gültige Daten im laufenden Betrieb ermittelt hat. Weiter werden im Richtungsbestimmungsschritt 26 von dem Richtungssensor 17 eingelesene Richtungsdaten ausgewertet, die Aufschluss darüber geben, wie sich die Person 2 im Umfeld des Fahrzeugs 1, das sie verlassen hat, bewegt. Aus diesen Daten wird eine Meldung 27 generiert und an eine Zentralstelle oder dezentral zur Auswertung durch in der Nähe befindliche andere Verkehrsteilnehmer versandt. Bevorzugt wird der Richtungsbestimmungsschritt 26 und die nachfolgende Meldung 27 periodisch wiederholt. Auf diese Weise kann eine kontinuierliche, aktualisierte Positionserfassung der Person 2 im Umfeld des Fahrzeugs 1 sowie jeweils eine aktualisierte Meldung 27 erfolgen, die über den jeweiligen Gefährdungszustand durch und für die Person 2 im Umfeld des Fahrzeugs 1 Aufschluss gibt.

## Patentansprüche

1. Verfahren zur Erkennung und Meldung eines Aussteigens von mindestens einer Person (2) aus einem Fahrzeug (1), wobei eine Erfassung des Aussteigens mittels mindestens eines Aussteigsensors (6) und einer Auswerteeinrichtung erfolgt und die Auswerteeinrichtung das Aussteigen bei einer Änderung des Belegzustands des Fahrzeugs durch Änderung der von dem Aussteigsensor (6) gelieferten Daten erkennt, **gekennzeichnet durch** eine Meldung (13) des Aussteigens **durch** drahtungebundene Nachrichtenübertragung, wobei
a. die Meldung (13) zentral ausgewertet und eine Warnmeldung (16) an andere, vorzugsweise in der Nähe des Fahrzeugs (1) befindliche Verkehrsteilnehmer abgegeben wird und die Meldung (13) an eine Zentralstelle (15) erfolgt, die die Meldung (13) zu der Wammeldung (16) bearbeitet, oder wobei
b. die Meldung dezentral in dem Fahrzeug (1) ausgewertet und die Warnmeldung (16) an die anderen, in der Nähe des Fahrzeugs (1) befindlichen Verkehrsteilnehmer abgegeben wird.

2. Verfahren nach Anspruch 1, **dadurch gekennzeichnet, dass** das Erkennen und/oder das Melden des Aussteigens im Falle eines Unfalls des Fahrzeugs (1) erfolgt oder im Falle des Liegenbleibens des Fahrzeugs (1) erfolgt oder im Falle eines stehenden, sich an einem Verkehrsgefährdungsort befindlichen Fahrzeugs (1) erfolgt, wobei der Verkehrsgefährdungsort eine stark befahrene oder unübersichtliche Stelle ist.

3. Verfahren nach einem der vorhergehenden Ansprüche, **dadurch gekennzeichnet, dass** eine Ausrichtungsermittlung des Fahrzeugs (1) erfolgt, wobei mittels einer Sensorik die Ausrichtung des Fahrzeugs relativ zu seiner Umwelt ermittelt wird.

4. Verfahren nach einem der vorhergehenden Ansprüche, **dadurch gekennzeichnet, dass** eine Richtungserkennung hinsichtlich der Richtung erfolgt, in der die Person (2) das Fahrzeug (1) verlässt.

5. Verfahren nach Anspruch 4, **dadurch gekennzeichnet, dass** die Richtungserkennung mittels Videosensierung, Radar oder Ultraschallsensierung erfolgt.

6. Verfahren nach Anspruch 4 oder 5, **dadurch gekennzeichnet, dass** die Richtung als Bestandteil oder zusätzlich zu der Meldung (13) übermittelt wird.

7. Verfahren nach einem der Ansprüche 4 bis 6, **dadurch gekennzeichnet, dass** die Richtungserkennung für mehrere Personen, insbesondere für mehrere Richtungen, unabhängig erfolgt.

8. Vorrichtung zur Erkennung und Meldung des Aussteigens von mindestens einer Person (2) aus einem Fahrzeug (1), mit einem Aussteigsensor (6) zur Erfassung des Aussteigens aus dem Fahrzeug (1) und einer Auswerteeinrichtung, wobei die Auswerteeinrichtung das Aussteigen bei einer Änderung des Belegzustands des Fahrzeugs (1) durch Änderung der von dem Aussteigsensor (6) gelieferten Daten erkennt, **gekennzeichnet durch** eine Meldeeinrichtung, die das Aussteigen **durch** Abfrage des Aussteigsensors (6) drahtungebunden meldet, wobei
a. die Meldung (13) zentral ausgewertet und eine Wammeldung (16) an andere, vorzugsweise in der Nähe des Fahrzeugs (1) befindliche Verkehrsteilnehmer abgegeben wird und die Meldung (13) an eine Zentralstelle (15) erfolgt, die die Meldung (13) zu der Wammeldung (16) bearbeitet, oder wobei
b. die Meldung dezentral in dem Fahrzeug (1) ausgewertet und die Warnmeldung (16) an die anderen, in der Nähe des Fahrzeugs (1) befindlichen Verkehrsteilnehmer abgegeben wird.

9. Vorrichtung nach Anspruch 8, **dadurch gekennzeichnet, dass** der Aussteigsensor (6) ein Türkontaktschalter (9) und/oder Videosensor (7) und/oder Ultraschallsensor ist.

10. Vorrichtung nach Anspruch 8 oder 9, **gekennzeichnet durch** einen Richtungssensor (17) zur Erfassung der Richtung, in der die Person (2) das Fahrzeug (1) verlässt.

11. Vorrichtung nach Anspruch 10, **dadurch gekennzeichnet, dass** der Richtungssensor (17) ein Videosensor (7) oder Ultraschallsensor ist.

12. Vorrichtung nach Anspruch 10 oder 11, **dadurch gekennzeichnet, dass** der Richtungssensor (17) ein Mehrfachrichtungssensor zur Erfassung mehrerer Richtungen für mehrere Personen (2) ist.

## Claims

1. Method for identifying and reporting disembarkation by at least one person (2) from a vehicle (1), wherein the disembarkation is sensed by means of at least one disembarkation sensor (6) and an evaluation device, and the evaluation device identifies the disembarkation in the event of a change in the occupied state of the vehicle as a result of a change in the data delivered by the disembarkation sensor (6), **characterized by** a report (13) of the disembarkation by wireless communication, wherein
a. the report (13) is evaluated centrally and a warning (16) is sent to other road users that are preferably situated in proximity to the vehicle (1), and the report (13) is made to a central office (15) which processes the report (13) to form the warning (16), or wherein
b. the report is evaluated locally in the vehicle (1) and the warning (16) is sent to the other road users situated in proximity to the vehicle (1).

2. Method according to Claim 1, **characterized in that** the disembarkation is identified and/or reported in the event of an accident involving the vehicle (1) or in the event of the vehicle (1) breaking down or in the event of the vehicle (1) being stationary at a traffic hazard location, wherein the traffic hazard location is a place with a high level of traffic or with poor visibility.

3. Method according to one of the preceding claims, **characterized in that** the orientation of the vehicle (1) is ascertained, wherein a sensor system is used to ascertain the orientation of the vehicle relative to its surroundings.

4. Method according to one of the preceding claims, **characterized in that** a direction is identified for the direction in which the person (2) leaves a vehicle (1).

5. Method according to Claim 4, **characterized in that** the direction is identified by means of video sensing, radar or ultrasonic sensing.

6. Method according to Claim 4 or 5, **characterized in that** the direction is transmitted as part of or in addition to the report (13).

7. Method according to one of Claims 4 to 6, **characterized in that** the direction is identified for a plurality of persons, particularly for a plurality of directions, independently.

8. Apparatus for identifying and reporting the disembarkation by at least one person (2) from a vehicle (1), having a disembarkation sensor (6) for sensing the disembarkation from the vehicle (1) and having an evaluation device, wherein the evaluation device identifies the disembarkation in the event of a change in the occupied state of the vehicle (1) as a result of a change in the data delivered by the disembarkation sensor (6), **characterized by** a reporting device which wirelessly reports the disembarkation by polling the disembarkation sensor (6), wherein
a. the report (13) is evaluated centrally and a warning (16) is sent to other road users that are preferably situated in proximity to the vehicle (1), and the report (13) is made to a central office (15) which processes the report (13) to form the warning (16), or wherein
b. the report is evaluated locally in the vehicle (1) and the warning (16) is sent to the other road users situated in proximity to the vehicle (1).

9. Apparatus according to Claim 8, **characterized in that** the disembarkation sensor (6) is a door contact switch (9) and/or video sensor (7) and/or ultrasonic sensor.

10. Apparatus according to Claim 8 or 9, **characterized by** a direction sensor (17) for sensing the direction in which the person (2) leaves the vehicle (1).

11. Apparatus according to Claim 10, **characterized in that** the direction sensor (17) is a video sensor (7) or ultrasonic sensor.

12. Apparatus according to Claim 10 or 11, **characterized in that** the direction sensor (17) is a multiple direction sensor for sensing a plurality of directions for a plurality of persons (2).

## Revendications

1. Procédé de détection et d'envoi d'un message indiquant une sortie d'au moins une personne (2) d'un véhicule (1), dans lequel une reconnaissance de la sortie s'effectue au moyen d'au moins un capteur de sortie (6) et d'un dispositif de traitement et dans lequel le dispositif de traitement détecte la sortie lors d'une modification de l'état d'occupation du véhicule par modification des données fournies par le capteur de sortie (6), **caractérisé par** un message (13) indiquant la sortie par transmission de messages au moyen d'une liaison filaire, dans lequel
a. le message (13) est traité centralement et un message d'avertissement (16) est fourni à un autre usager de la route se trouvant de préférence à proximité du véhicule (1) et le message (13) est créé en un site central (15) qui transforme le message (13) en un message d'avertissement (16), ou dans lequel
b. le message est traité de manière décentralisée dans le véhicule (1) et le message d'avertissement (16) est fourni aux autres usagers de la route se trouvant à proximité du véhicule (1).

2. Procédé selon la revendication 1, **caractérisé en ce que** la détection et/ou l'envoi du message indiquant la sortie s'effectue en cas d'accident du véhicule (1) ou s'effectue en cas d'abandon du véhicule (1) ou s'effectue dans le cas où le véhicule (1) est immobilisé à un endroit gênant la circulation routière, dans lequel l'endroit gênant la circulation routière est un endroit à forte circulation ou mal signalisé.

3. Procédé selon l'une quelconque des revendications précédentes, **caractérisé en ce qu'**une détermination d'orientation du véhicule (1) est effectuée, l'orientation du véhicule étant déterminée au moyen de capteurs par rapport à son environnement.

4. Procédé selon l'une quelconque des revendications précédentes, **caractérisé en ce qu'**une détection de direction est effectuée, celle-ci indiquant la direction dans laquelle la personne (2) a quitté le véhicule (1).

5. Procédé selon la revendication 4, **caractérisé en ce que** la détection de direction s'effectue par des capteurs vidéo, par radar ou par des capteurs à ultrasons.

6. Procédé selon la revendication 4 ou 5, **caractérisé en ce que** la direction est transmise en tant que partie du message (13) ou en plus de celui-ci.

7. Procédé selon l'une quelconque des revendications 4 à 6, **caractérisé en ce que** la détection de direction s'effectue indépendamment pour plusieurs personnes, notamment pour plusieurs directions.

8. Dispositif de détection et d'envoi d'un message indiquant la sortie d'au moins une personne (2) d'un véhicule (1), comprenant un capteur de sortie (6) destiné à reconnaître la sortie du véhicule (1) et un dispositif de traitement, dans lequel le dispositif de traitement détecte la sortie lors d'une modification de l'état d'occupation du véhicule (1) par modification des données fournies par le capteur de sortie (6), **caractérisé par** un dispositif d'envoi de message qui indique la sortie au moyen d'une liaison filaire par une interrogation du capteur de sortie (6), dans lequel
a. le message (13) est traité centralement et un message d'avertissement (16) est fourni à d'autres usagers de la route se trouvant de préférence à proximité du véhicule (1) et le message (13) est créé en un site central (15) qui transforme le message (13) en le message d'avertissement (16), ou dans lequel
b. le message est traité de manière décentralisée dans le véhicule (1) et le message d'avertissement (16) est fourni aux autres usagers de la route se trouvant à proximité du véhicule (1).

9. Dispositif selon la revendication 8, **caractérisé en ce que** le capteur de sortie (6) est un contact de porte (9) et/ou un capteur vidéo (7) et/ou un capteur à ultrasons.

10. Dispositif selon la revendication 8 ou 9, **caractérisé par** un capteur de direction (17) destiné à détecter la direction dans laquelle la personne (2) a quitté le véhicule (1).

11. Dispositif selon la revendication 10, **caractérisé en ce que** le capteur de direction (17) est un capteur vidéo (7) ou un capteur à ultrasons.

12. Dispositif selon la revendication 10 ou 11, **caractérisé en ce que** le capteur de direction (17) est un capteur de directions multiples destiné à détecter plusieurs directions pour plusieurs personnes (2).
